# EUROPÄISCHE PATENTSCHRIFT

(11) **EP 1 500 159 B1**
(45) Veröffentlichungstag und Bekanntmachung des Hinweises auf die Patenterteilung: **10.09.2008**
(21) Anmeldenummer: 03732289.8
(22) Anmeldetag: 23.04.2003
(51) Int. Cl.: H01M 8/14, H01M 8/02

(54) **SCHMELZKARBONATBRENNSTOFFZELLE UND VERFAHREN ZUR HERSTELLUNG EINER SOLCHEN**
FUEL CELL AND METHOD FOR PRODUCTION THEREOF
PILE A COMBUSTIBLE ET PROCEDE DE PRODUCTION DE LADITE PILE

(30) Priorität: 30.04.2002 DE 10219456
(43) Veröffentlichungstag der Anmeldung: 26.01.2005
(73) Patentinhaber: CFC Solutions GmbH, 85521 Ottobrunn (DE)
(72) Erfinder: BEDNARZ, Marc, 85521 Ottobrunn (DE); STEINFORT, Marc, 71134 Aidingem (DE)
(74) Vertreter: Winter, Josef
(86) Internationale Anmeldenummer: PCT/EP2003/004194
(87) Internationale Veröffentlichungsnummer: WO 2003/094264

(56) Entgegenhaltungen:
- EP-A- 0 674 352
- WO-A-02/41435
- PATENT ABSTRACTS OF JAPAN vol. 011, no. 036 (E-477), 3. Februar 1987 (1987-02-03) & JP 61 203573 A (HITACHI LTD), 9. September 1986 (1986-09-09)

## Beschreibung

Die Erfindung betrifft eine Brennstoffzelle, insbesondere eine Schmelzelektrolytbrennstoffzelle, mit einer Anode, einer Kathode und einer zwischen diesen angeordneten Elektrolytmatrix oder Elektrolytschicht, sowie mit an der Anode und an der Kathode angeordneten Stromkollektoren, welche die Anode bzw. die Kathode elektrisch kontaktieren und Strömungswege für ein Brenngas bzw. ein Kathodengas zu der Anode bzw. zu der Kathode bilden, wobei der anodenseitige Stromkollektor zusammen mit der Anode eine Anodenhalbzelle und/oder der kathodenseitige Stromkollektor zusammen mit der Kathode eine Kathodenhalbzelle bildet.

Bei den derzeit üblichen Brennstoffzellen, z.B wie in WO 02/41435 veröffentlicht insbesondere Schmelzkarbonatbrennstoffzellen, wird die Elektrolytmatrix als eine separate Komponente in die Brennstoffzelle bzw. in jede der Brennstoffzellen eines Brennstoffzellenstapels, zu dem eine Anzahl von Brennstoffzellen zusammengefügt werden, integriert. Bei den üblichen Dicken und Ausdehnungen der Elektrolytmatrix einer leistungsfähigen Brennstoffzelle, nämlich einer Dicke von weniger als 1 mm, typischerweise 0,5 bis 0,6 mm, und einer Fläche von typischerweise 1 m² ist die manuelle Handhabung der Elektrolytmatrix wegen deren Empfindlichkeit gegen Perforation oder Einreißen kritisch. Insbesondere bei der Montage von großen Einheiten an Zellstapeln besteht die Gefahr, dass ein Mangel an notwendiger Sorgfalt und Präzision zu Fehlerhaftigkeit oder Funktionsunfähigkeit des Brennstoffzellenstapels führen.

Die Aufgabe der Erfindung ist es eine Brennstoffzelle sowie ein Verfahren zur Herstellung einer solchen anzugeben, bei denen die Gefahr einer Beschädigung der Elektrolytmatrix oder Elektrolytschicht vermindert oder ausgeschlossen ist.

Diese Aufgabe wird durch die im Anspruch 1 angegebene Brennstoffzelle, sowie durch das im Anspruch 16 angegebene Verfahren zur Herstellung einer solchen gelöst.

Vorteilhafte Weiterbildungen sind in den jeweiligen Unteransprüchen angegeben.

Durch die Erfindung wird eine Brennstoffzelle, insbesondere eine Schmelzkarbonatbrennstoffzelle, mit einer Anode, einer Kathode und einer zwischen diesen angeordneten Elektrolytmatrix oder Elektrolytschicht, sowie mit an der Anode und an der Kathode angeordneten Stromkollektoren, welche die Anode bzw. die Kathode elektrisch kontaktieren und Gasströmungswege für ein Brenngas bzw. ein Kathodengas zu der Anode bzw. zu der Kathode bilden, geschaffen, wobei der anodenseitige Stromkollektor zusammen mit der Anode eine Anodenhalbzelle und/oder der kathodenseitige Stromkollektor zusammen mit der Kathode eine Kathodenhalbzelle bildet. Erfindungsgemäß ist es vorgesehen, dass die Elektrolytmatrix oder Elektrolytschicht auf einer der Halbzellen aufgebracht ist, und dass an den Seiten der Stromkollektoren angeordnete, einen zum Inneren der Brennstoffzelle hin geöffneten U-förmigen Querschnitt bildende Dichtungselemente vorgesehen sind, welche den Stromkollektor von Anode bzw. Kathode seitlich umfassen und abdichten, wobei eine isolierende Schicht vorgesehen ist, welche das jeweilige Dichtungselement einer Halbzelle gegen die andere Halbzelle elektrisch isoliert.

Gemäß einer bevorzugten Ausführungsform ist es vorgesehen, dass die Elektrolytmatrix auf der Anodenhalbzelle aufgebracht ist.

Gemäß einer anderen bevorzugten Ausführungsform ist es vorgesehen, dass die Elektrolytmatrix oder Elektrolytschicht auf der Kathodenhalbzelle aufgebracht ist.

Gemäß einer Ausführungsform können die Dichtungselemente jeweils einander gegenüberliegend an der Anodenhalbzelle und der Kathodenhalbzelle vorgesehen sein.

Gemäß einer anderen Ausführungsform können die Dichtungselemente jeweils an einer Seite von jeweils der Anodenhalbzelle und der Kathodenhalbzelle vorgesehen sein, wobei das Dichtungselement der Anodenhalbzelle an der einen Seite und das Dichtungselement der Kathodenhalbzelle an der anderen Seite vorgesehen ist.

Vorzugsweise ist die isolierende Schicht auf dem Dichtungselement vorgesehen.

Alternativ kann die isolierende Schicht dem Dichtungselement der einen Halbzelle gegenüberliegend auf der anderen Halbzelle vorgesehen sein.

Gemäß einer Ausführungsform weist das Dichtungselement innen und/oder außen eine isolierende Schicht auf.

Gemäß einer bevorzugten Ausführungsform der erfindungsgemäßen Brennstoffzelle ist es vorgesehen, dass der Stromkollektor durch eine poröse Struktur gebildet ist, welche die Anode bzw. die Kathode trägt und in welcher Strömungswege zum Zuführen von Brenngas bzw. Kathodengas zu der Anode bzw. der Kathode ausgebildet sind, und dass die Dichtungselemente die den Stromkollektor bildende poröse Struktur und die darauf befindliche Anode bzw. seitlich umfassen und abdichten.

Vorzugsweise entspricht die Höhe des Dichtungselements einschließlich, sofern vorhanden, der isolierenden Schicht der Dicke der Halbzelle, so dass die Oberflächen von beiden bündig sind.

Die die Stromkollektoren bildende poröse Struktur kann aus einem Sintermaterial, vorzugsweise aus einem porösen Nickel-Sintermaterial bestehen.

Insbesondere kann die die Stromkollektoren bildende poröse Struktur aus einem Nickel-Schaum-Material mit einem Feststoffgehalt von 4% bis ca. 35% bestehen.

Die isolierende Schicht kann aus einer Schicht Matrixmaterial bestehen.

Alternativ kann die isolierende Schicht aus einem vom Matrixmaterial verschiedenen Isoliermaterial bestehen.

Gemäß einer weiteren Ausführungsform der erfindungsgemäßen Brennstoffzelle ist es vorgesehen, dass die Matrix auf der Halbzelle einschließlich der Dichtungselemente aufgebracht ist und gleichzeitig als isolierende Schicht dient.

Gemäß dem erfindungsgemäßen Verfahren zur Herstellung einer Brennstoffzelle der vorgenannten Art ist es vorgesehen, dass die Elektrolytmatrix durch Herstellen einer Beschichtung auf der Halbzelle aufgebracht wird.

Vorzugsweise wird die Beschichtung durch Sprühen, Gießen, Tauchen oder Rakeln hergestellt.

Vorzugsweise werden die Dichtungselemente seitlich auf die Halbzellen aufgesteckt.

Gemäß bevorzugten Ausführungsformen des erfindungsgemäßen Verfahrens wird die Oberfläche des Dichtungselements einschließlich, sofern vorhanden, der isolierenden Schicht durch Walzen, Prägen oder Pressen mit der Oberfläche der Halbzelle bündig gemacht.

Gemäß einer alternativen Ausführungsform des erfindungsgemäßen Verfahrens wird vor dem Aufstecken der Dichtungselemente durch Walzen, Prägen oder Pressen ein Absatz an den Halbzellen hergestellt, so dass die Dichtungselemente einschließlich, sofern vorhanden, der isolierenden Schicht mit der Oberfläche der Halbzelle bündig ist.

Gemäß bevorzugten Ausführungsformen des erfindungsgemäßen Verfahrens wird die isolierende Schicht durch Sprühen, Gießen, Tauchen oder Rakeln hergestellt.

Gemäß einer alternativen Ausführungsform des erfindungsgemäßen Verfahrens werden zuerst die Dichtungselemente aufgebracht und dann die Matrix auf die Halbzelle aufgebracht, die gleichzeitig als isolierende Schicht dient.

Im folgenden werden Ausführungsbeispiele der Erfindung anhand der Zeichnung erläutert.

Es zeigen:
Figur 1a) und 1b) jeweils schematisierte perspektivische Schnittansichten einer Brennstoffzelle zur Erläuterung von deren grundsätzlichem Aufbau und zur Darstellung eines ersten Ausführungsbeispiels der Erfindung;
Figur 2a), 2b) und 2c) schematisierte perspektivische Schnittansichten durch Brennstoffzellen gemäß einem zweiten, einem dritten und einem vierten Ausführungsbeispiel der Erfindung;
Figur 3a) und 3b) schematisierte perspektivische Schnittansichten von Brennstoffzellen zur Erläuterung verschiedener Arten der Isolation von Dichtungselementen bei den in Figur 2 dargestellten Ausführungsbeispielen;
Figur 4 eine vergrößerte schematisierte Querschnittansicht eines Dichtungselements gemäß einem Ausführungsbeispiel der Erfindung;
Figur 5 eine vergrößerte schematisierte Schnittansicht einer Brennstoffhalbzelle mit einem durch eine poröse Struktur gebildeten Stromkollektor und einer von diesem getragenen Elektrode zusammen mit einem Dichtungselement zur seitlichen Abdichtung der Halbzelle gemäß einem Ausführungsbeispiel der Erfindung;
Figur 6 eine schematisierte vergrößerte Querschnittsansicht von einem Ausschnitt einer einen Stromkollektor bildenden porösen Struktur mit einer drauf angeordneten Elektrode gemäß einem Ausführungsbeispiel der Erfindung; und
Figur 7 in einem etwas kleineren Maßstab eine perspektivische Ansicht der den Stromkollektor bildenden porösen Struktur von Figur 6.

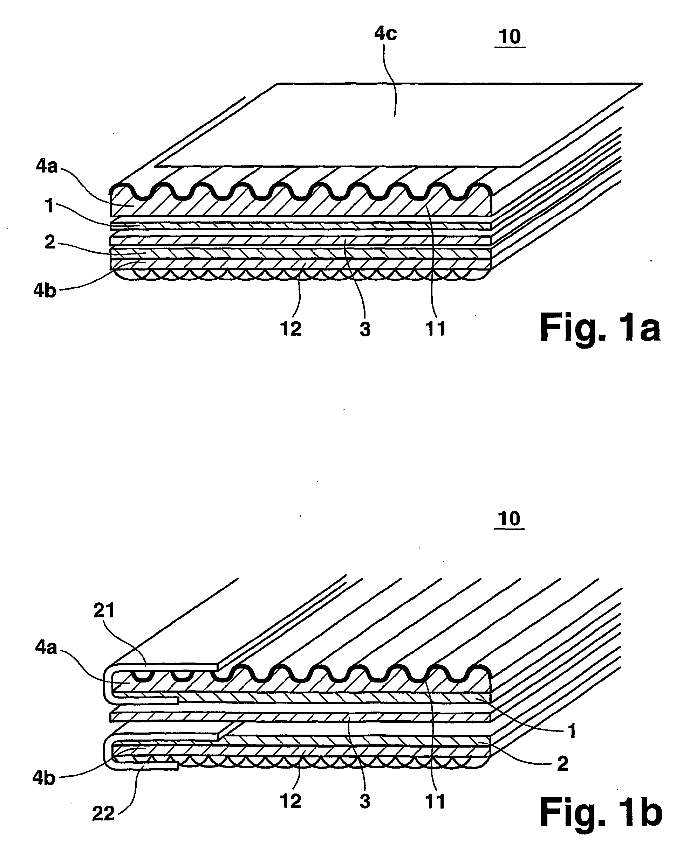

In Figur 1a) ist in schematisierte perspektivischer Schnittansicht eine insgesamt mit dem Bezugszeichen 10 bezeichnete Brennstoffzelle dargestellt. Typischerweise sind eine größere Anzahl von solchen Brennstoffzellen 10 zu einem Brennstoffzellenstapel zusammengefasst, wie dies im Stande der Technik bekannt ist. Die Brennstoffzelle 10 enthält eine Anode 1, eine Kathode 2 und eine dazwischen angeordnete Elektrolytmatrix 3. Im Falle der in den Figuren dargestellten Schmelzkarbonatbrennstoffzelle besteht die Elektrolytmatrix aus einem porösen Material, dessen Poren im Betrieb den schmelzflüssigen Elektrolyt enthalten. Im Falle einer Festoxidbrennstoffzelle, die ebenfalls von der Erfindung umfasst ist, ist an Stelle einer Elektrolytmatrix eine oxidkeramische Elektrolytschicht vorgesehen. Der im folgenden verwendete Begriff "Elektrolytmatrix" steht synonym auch für eine Elektrolytschicht anderer Brennstoffzellentypen. Zwischen benachbarten Brennstoffzellen 10 des besagten Brennstoffzellenstapels sind Bipolarbleche 4c angeordnet, durch welche die benachbarten Brennstoffzellen 10 gastechnisch voneinander getrennt, jedoch elektrisch kontaktiert sind. Zwischen den Bipolarblechen 4c, von denen in Figur 1a) nur eines dargestellt ist, und der Anode 1 bzw. der Kathode 2 ist jeweils ein Stromkollektor 4a bzw. 4b vorgesehen, welcher einerseits die jeweilige Elektrode, d.h. die Anode 1 bzw. die Kathode 2 gegen das Bipolarblech 4c und damit gegen die benachbarte Brennstoffzelle elektrisch kontaktiert und andererseits dazu dient, die Ströme eines Brenngases bzw. eines Kathodengases der Anode 1 bzw. der Kathode 2 zuzuführen und über diese zu verteilen. Die Anode 1 bildet zusammen mit dem Stromkollektor 4a eine Anodenhalbzelle 11, die Kathode 2 bildet zusammen mit dem Stromkollektor 4b eine Kathodenhalbzelle 12.

Wie Figur 1b) zeigt, sind gemäß einem ersten Ausführungsbeispiel der Erfindung an den Seiten der Stromkollektoren 4a, 4b jeweils Dichtungselemente 21, 22 vorgesehen, die einen zum Inneren der Brennstoffzelle 10 hin geöffneten U-förmigen Querschnitt bilden und den Stromkollektor 4a, 4b von Anode 1 bzw. Kathode 2 bzw. die durch den Stromkollektor 4a und die Anode 1 gebildete Anodenhalbzelle 11 bzw. die durch den Stromkollektor 4b und die Kathode 2 gebildete Kathodenhalbzelle 12 seitlich umfassen und abdichten. Bei dem hier dargestellten Ausführungsbeispiel sind die Dichtungselemente 21, 22 einander gegenüberliegend an der gleichen Seite jeder der Anodenhalbzelle 11 und der Kathodenhalbzelle 12 vorgesehen. Die Elektrolytmatrix 3 erstreckt sich zwischen die Dichtungselemente 21, 22 und bildet eine isolierende Schicht 31, die das Dichtungselement 21 der einen Halbzelle 11 gegen die andere Halbzelle 12 bzw. gegen das Dichtungselement 22 der letzteren elektrisch isoliert.

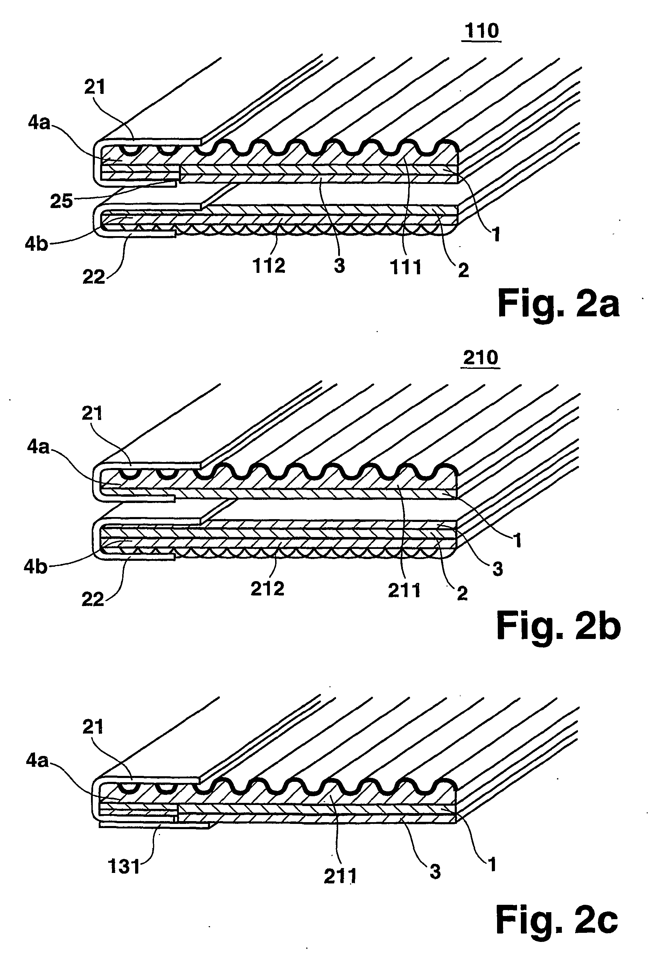

Wie das in Figur 2a) dargestellte Ausführungsbeispiel zeigt, kann die Elektrolytmatrix 3 auf der Anodenhalbzelle 111 aufgebracht sein, d.h. auf der Anode 1, welche ihrerseits auf den anodenseitigen Stromkollektor 4a aufgebracht ist. Auch hier ist jede der beiden Halbzellen, die Anodenhalbzelle 111 und die Kathodenhalbzelle 112, von einem Dichtungselement 21 bzw. 22 seitlich umfasst und abgedichtet.

Bei dem in Figur 2b) gezeigten Ausführungsbeispiel ist die Elektrolytmatrix 3 auf der Kathodenhalbzelle 212 aufgebracht, d.h. auf der Kathode 2, welche ihrerseits von dem kathodenseitigen Stromkollektor 4b getragen ist. Die Halbzellen 211 und 212 sind wiederum von Dichtungselementen 21 bzw. 22 seitlich umfasst und abgedichtet.

Sowohl bei dem in Figur 2a) dargestellten Ausführungsbeispiel wie auch bei dem in Figur 2b) dargestellten Ausführungsbeispiel wird die Elektrolytmatrix 3 von dem jeweiligen Dichtungselement 21 bzw. 22 mit umfasst, so dass die Elektrolytmatrix 3 bei diesen Ausführungsbeispielen keine isolierende Funktion im Sinne einer elektrischen Trennung der Dichtungselemente 21, 22 leistet. Damit ein elektrischer Kontakt, also ein Kurzschluss zwischen den Dichtungselementen 21, 22 verhindert wird, ist eine isolierende Schicht 131 vorgesehen, vergleiche Figur 2c), die das Dichtungselement 21 bzw. 22 der einen Halbzelle 111 bzw. 211 gegen die andere Halbzelle elektrisch isoliert.

Diese isolierende Schicht 131 kann, wie in Figur 2c) dargestellt, an dem Dichtungselement 21 der einen Halbzelle, hier der Halbzelle 111, welche die Elektrolytmatrix 3 trägt, vorgesehen sein, oder sie kann auch an dem Dichtungselement der gegenüberliegenden Halbzelle vorgesehen sein. In beiden Fällen werden die Dichtungselemente 21, 22 gegeneinander bzw. gegen die jeweils gegenüberliegende Halbzelle elektrisch isoliert. Die isolierende Schicht 131 kann aus einer Schicht Matrixmaterial oder aus einem vom Matrixmaterial verschiedenen Isoliermaterial bestehen.

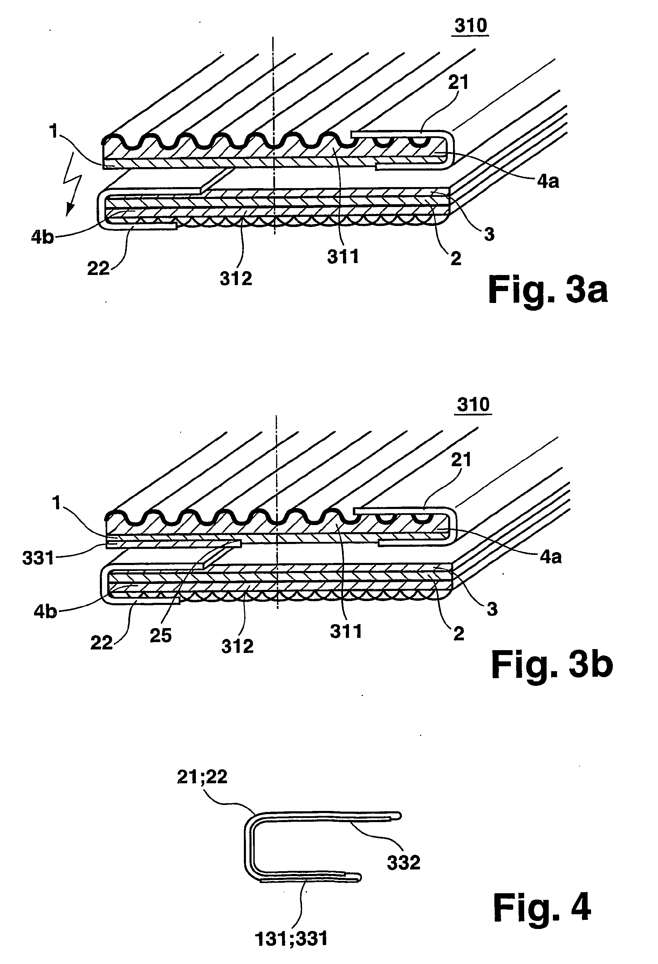

In den Figuren 3a) und 3b) sind Ausführungsbeispiele gezeigt, bei denen die Dichtungselemente 21, 22 jeweils an einer Seite der Anodenhalbzelle 311 bzw. der Kathodenhalbzelle 312 vorgesehen sind, wobei das Dichtungselement 21 der Anodenhalbzelle 311 an der einen Seite und das Dichtungselement 22 der Kathodenhalbzelle 312 an der anderen Seite vorgesehen ist. Die Elektrolytmatrix 3 ist bei diesen Ausführungsbeispielen an der Kathodenhalbzelle 312 vorgesehen, also auf die Kathode 2 aufgebracht, welche ihrerseits von dem Stromkollektor 4b getragen ist. Somit ist bei dem in Figur 3a) dargestellten Ausführungsbeispiel das Dichtungselement 21 der Anodenhalbzelle 311 der auf der Kathodenhalbzelle 312 vorgesehenen Elektrolytmatrix 3 gegenüberliegend angeordnet und damit durch die Elektrolytmatrix 3 gegen die Kathodenhalbzelle 312 elektrisch isoliert, während das Dichtungselement 22 der Kathodenhalbzelle 312, welches die auf der Kathodenhalbzelle 312 angeordnete Elektrolytmatrix 3 mit umfasst, der Anode 1 der Anodenhalbzelle 311 gegenüberliegend angeordnet ist, so dass ein elektrischer Kontakt zwischen diesen beiden besteht, sofern keine Maßnahmen zur elektrischen Isolation vorgesehen sind. Daher ist, wie in Figur 3b) gezeigt, eine elektrisch isolierende Schicht 331 vorgesehen, die das Dichtungselement 22 der Kathodenhalbzelle 312 gegen die Anodenhalbzelle 311 isoliert. Diese elektrisch isolierende Schicht 331 ist bei dem in Figur 3b) gezeigten Ausführungsbeispiel auf der Anode 1 der Anodenhalbzelle 311 vorgesehen. Alternativ kann, ähnlich wie bei Figur 2c) gezeigt, die elektrisch isolierende Schicht 331 auf dem Dichtungselement 22 vorgesehen sein, welches die Kathodenhalbzelle 312 umfasst. Der Effekt einer elektrischen Isolation ist in beiden Fällen der gleiche. Die elektrisch isolierende Schicht 331 kann wiederum aus einer Schicht Matrixmaterial oder aus einem vom Matrixmaterial verschiedenen Isoliermaterial bestehen.

Die elektrisch isolierende Schicht 131; 331 kann, wie in Figur 4 in einer vergrößerten Querschnittsansicht gezeigt ist, außen auf dem Dichtungselement 21 bzw. 22 vorgesehen sein. Alternativ oder zusätzlich kann auch innen am Dichtungselement 21 bzw. 22 eine isolierende Schicht 332 vorgesehen sein. In beiden Fällen bewirken die isolierenden Schichten 131; 331 bzw. 332 eine elektrische Isolation der Halbzellen gegeneinander.

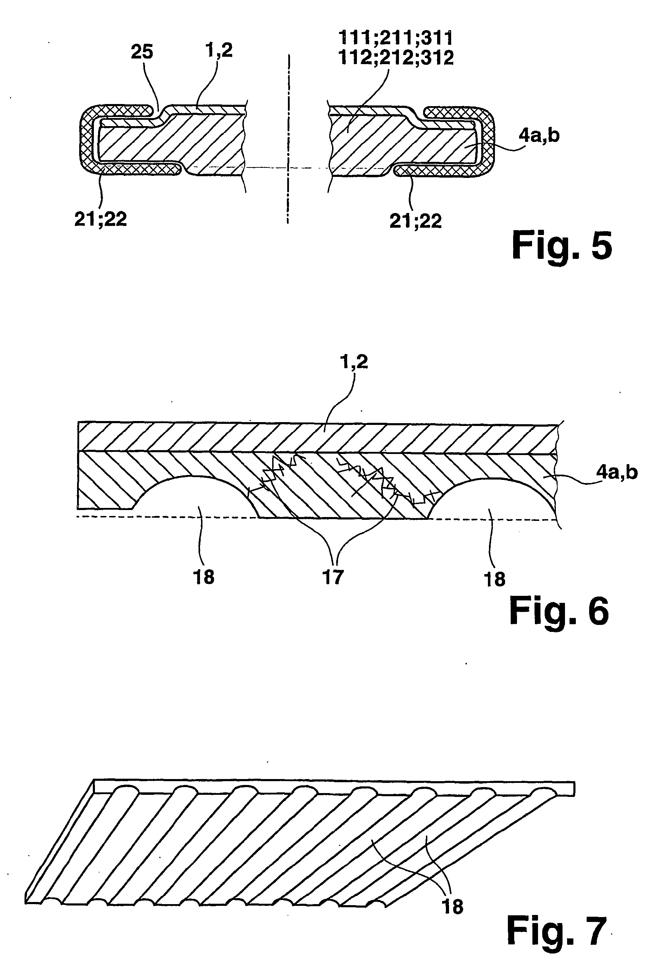

Wie in Figur 5 in einer vergrößerten schematisierten Querschnittsansicht dargestellt ist, welche eine aus einer Elektrode 1 bzw. 2 und einem Stromkollektor 4a bzw. 4b gebildete Halbzelle 111; 211; 311 bzw. 112; 212; 312 zeigt, ist die Halbzelle seitlich von dem Dichtungselement 21, 22 umfasst und abgedichtet. Die Höhe des Dichtungselements 21 bzw. 22 einschließlich, sofern vorhanden, einer isolierenden Schicht, welche in Figur 5 jedoch nicht dargestellt ist, entspricht der Dicke der Halbzelle 111; 211; 311 bzw. 112; 212; 312, so dass die Oberflächen von beiden bündig sind. Dazu ist an der Halbzelle ein der Materialstärke des Dichtungselements 21 bzw. 22 und, sofern vorhanden, der isolierenden Schicht, entsprechender Absatz 25 ausgebildet, so dass sich die jeweiligen Oberflächen glatt fortsetzen.

Der Stromkollektor 4a, 4b ist, wie in Figur 5 weiterhin angedeutet, durch eine poröse Struktur gebildet, welche die Anode 1 bzw. die Kathode 2 trägt und mit dieser die jeweilige Anoden- bzw. Kathodenhalbzelle bildet. Die poröse Struktur der Stromkollektoren 4a, 4b kann aus einem Sintermaterial, insbesondere einem porösen Nickel-Sintermaterial bestehen, bei dem hier beschriebenen Ausführungsbeispiel aus einem Nickel-Schaum-Material mit einem Feststoffgehalt von 4% bis ca. 35%. Die die Anode 1 bzw. die Kathode 2 tragende Oberfläche der porösen Struktur 4a, 4b ist als ebene Fläche ausgebildet und die Anode 1 bzw. die Kathode 2 sind als Schicht auf der den Stromkollektor 4a, 4b bildenden porösen Struktur vorgesehen.

Figur 6, die eine vergrößerte Querschnittsdarstellung eines durch eine poröse Struktur gebildeten Stromkollektor 4a, 4b mit einer darauf aufgebrachten Elektrode 1, 2 darstellt, zeigt Strömungswege zum Führen von Brenngas bzw. Kathodengas zum einen in Form von (mikroskopischen) Strömungswegen 17, die aufgrund der Porosität im Inneren der porösen Struktur vorhanden sind, sowie (makroskopische) Gaskanäle 18, die in oder an der porösen Struktur geschaffen sind. Bei dem dargestellten Ausführungsbeispiel sind solche Kanäle 18 an der der jeweiligen Elektrode 1, 2 abgewandten Oberfläche der die Stromkollektoren 4a, 4b bildenden porösen Struktur in Form einer Kanellierung vorgesehen.

Figur 7 zeigt eine perspektivische Darstellung eines solchen Stromkollektors 4a, 4b aus welcher der Verlauf der (makroskopischen) Kanäle 18 an der Oberfläche der porösen Struktur ersichtlich ist. Dieser Verlauf ist nur als illustrierendes Beispiel gedacht, die Kanäle können selbstverständlich in jeder anderen geeigneten Form ausgeführt sein.

Die Elektrolytmatrix 3 kann durch Herstellen einer Beschichtung auf der jeweiligen Halbzelle 11; 111; 311 bzw. 12; 212; 312, also sowohl auf der Anodenhalbzelle als auch auf der Kathodenhalbzelle aufgebracht und vorgesehen werden.

Die Beschichtung kann durch Sprühen, Gießen, Tauchen oder Rakeln oder durch ein anderes geeignetes Beschichtungsverfahren hergestellt werden.

Die Dichtungselemente 21, 22 können seitlich auf die Halbzellen 11; 111; 211; 311 bzw. 12; 112; 212; 312 aufgesteckt werden.

Die Oberfläche des Dichtungselements 21; 22 kann einschließlich, sofern vorhanden, der isolierenden Schicht 131; 331 durch Walzen, Prägen oder Pressen mit der Oberfläche der Halbzelle 111; 211; 311; 112; 212; 312 bündig gemacht werden. Alternativ kann vor dem Aufstecken der Dichtungselemente 21; 22 durch Walzen, Prägen oder Pressen ein Absatz 25 an den Halbzellen 11; 111; 211; 311 bzw. 12; 112; 212; 312 hergestellt werden, so dass die Dichtungselemente 21, 22 einschließlich, sofern vorhanden, der isolierenden Schicht 131; 331 mit der Oberfläche der Halbzelle bündig ist.

Ebenso kann eine direkt auf eine Halbzelle 311 aufgebrachte isolierende Schicht 331, vergleiche Figur 3b), durch Walzen, Prägen oder Pressen mit der Oberfläche der Halbzelle 311 bündig gemacht oder alternativ vor dem Aufbringen der isolierenden Schicht 331 ebenfalls durch Walzen, Prägen oder Pressen ein entsprechender Absatz an der Halbzelle 311 hergestellt werden, so dass die isolierende Schicht 331 mit der Oberfläche der Halbzelle 311 bündig ist.

Die isolierende Schicht 131; 331 bzw. 332 kann durch Sprühen, Gießen, Tauchen oder Rakeln hergestellt werden.

Gemäß einem alternativen Verfahren können zuerst die Dichtungselemente 21, 22 seitlich auf die Halbzellen 11 bzw. 12 aufgesteckt und dann die Matrix 3 auf eine der Halbzellen 11 bzw. 12 aufgebracht werden, die dann gleichzeitig als isolierende Schicht 31 zwischen dem einen Dichtungselement 21 bzw. 22 und der gegenüberliegenden Halbzelle 12 bzw. 11 bzw. dem gegenüberliegenden Dichtungselement 22 bzw. 21 fungiert, vergleiche Figur 1b).

### Bezugszeichenliste

- 1: Anode
- 2: Kathode
- 3: Elektrolytmatrix
- 4: Separatorplatte
- 4a: Stromkollektor
- 4b: Stromkollektor
- 4c: Bipolarblech
- 10; 110; 210; 310: Brennstoffzelle
- 11; 111; 211; 311: Anodenhalbzelle
- 12; 112; 212; 312: Kathodenhalbzelle
- 17: Strömungswege
- 18 .: Strömungswege
- 21; 121; 221; 321; 421: Dichtungselement
- 22; 122; 222; 322: Dichtungselement
- 25: Absatz
- 31; 131; 331: isolierende Schicht
- 332: isolierende Schicht

## Patentansprüche

1. Brennstoffzelle, insbesondere Schmelzkarbonatbrennstoffzelle, mit einer Anode (1), einer Kathode (2) und einer zwischen diesen angeordneten Elektrolytmatrix (3) oder einer Elektrolytschicht, sowie mit an der Anode (1) und an der Kathode (2) angeordneten Stromkollektoren (4a, 4b), welche die Anode (1) bzw. die Kathode (2) elektrisch kontaktieren und Gasströmungswege (17, 18) für ein Brenngas bzw. ein Kathodengas zu der Anode (1) bzw. zu der Kathode (2) bilden, wobei der anodenseitige Stromkollektor (4a) zusammen mit der Anode (1) eine Anodenhalbzelle (11; 111; 211; 311) und der kathodenseitige Stromkollektor (4b) zusammen mit der Kathode (2) eine Kathodenhalbzelle (12, 112; 212; 312) bildet, **dadurch gekennzeichnet, dass** die Elektrolytmatrix (3) oder die Elektrolytschicht auf einer der Halbzellen (11; 12; 111; 212; 312) aufgebracht ist, und dass an den Seiten der Stromkollektoren (4a, 4b) angeordnete, einen zum Inneren der Brennstoffzelle hin geöffneten U-förmigen Querschnitt bildende Dichtungselemente (21, 22) vorgesehen sind, welche den Stromkollektor (4a, 4b) von Anode (1) bzw. Kathode (2) seitlich umfassen und abdichten, wobei eine isolierende Schicht (31; 131; 331; 431; 432) vorgesehen ist, welche das jeweilige Dichtungselement (21, 22) einer Halbzelle (11; 111; 311; 312) gegen die andere Halbzelle (12; 112; 312) elektrisch isoliert.

2. Brennstoffzelle nach Anspruch 1, **dadurch gekennzeichnet, dass** die Elektrolytmatrix (3) oder Elektrolytschicht auf der Anodenhalbzelle (11; 111) aufgebracht ist.

3. Brennstoffzelle nach Anspruch 1, **dadurch gekennzeichnet, dass** die Elektrolytmatrix (3) oder Elektrolytschicht auf der Kathodenhalbzelle (12; 212) aufgebracht ist.

4. Brennstoffzelle nach Anspruch 1, 2 oder 3, **dadurch gekennzeichnet, dass** die Dichtungselemente (21; 22) jeweils einander gegenüberliegend an der Anodenhalbzelle (11; 111; 211) und der Kathodenhalbzelle (12; 112; 212) vorgesehen sind.

5. Brennstoffzelle nach Anspruch 1, 2 oder 3, **dadurch gekennzeichnet, dass** die Dichtungselemente (21; 22) jeweils an einer Seite der Anodenhalbzelle (311) und der Kathodenhalbzelle (312) vorgesehen sind, wobei das Dichtungselement (21) der Anodenhalbzelle (311) an der einen Seite und das Dichtungselement (22) der Kathodenhalbzelle (312) an der anderen Seite vorgesehen ist.

6. Brennstoffzelle nach einem der Ansprüche 1 bis 5, **dadurch gekennzeichnet, dass** die isolierende Schicht (31; 131; 431) auf dem Dichtungselement (21; 22) vorgesehen ist.

7. Brennstoffzelle nach einem der Ansprüche 1 bis 5, **dadurch gekennzeichnet, dass** die isolierende Schicht (331) dem Dichtungselement (22) der einen Halbzelle (312) gegenüberliegend auf der anderen Halbzelle (311) vorgesehen ist.

8. Brennstoffzelle nach einem der Ansprüche 1 bis 6, **dadurch gekennzeichnet, dass** das Dichtungselement (21) innen und/oder außen eine isolierende Schicht (431; 432) aufweist.

9. Brennstoffzelle nach einem der Ansprüche 1 bis 8, **dadurch gekennzeichnet, dass** der Stromkollektor (4a, 4b) durch eine poröse Struktur gebildet ist, welche die Anode (1) bzw. die Kathode (2) trägt und in welcher Strömungswege (17, 18) zum Zuführen von Brenngas bzw. Kathodengas zu der Anode (1) bzw. der Kathode (2) ausgebildet sind, und dass die Dichtungselemente (21, 22) die den Stromkollektor (4a, 4b) bildende poröse Struktur bzw. die den Stromkollektor (4a, 4b) bildende poröse Struktur und, sofern vorhanden, die darauf befindliche Anode (1) bzw. Kathode (2) seitlich umfassen und abdichten.

10. Brennstoffzelle nach Anspruch 9 in Verbindung mit Anspruch 6 oder 8, **dadurch gekennzeichnet, dass** die Höhe des Dichtungselements (21) einschließlich, sofern vorhanden, der isolierenden Schicht (131) der Dicke der Halbzelle (11; 111; 211; 311; 12; 112; 212; 312) entspricht, so dass die Oberflächen von beiden bündig sind.

11. Brennstoffzelle nach Anspruch 9 oder 10, **dadurch gekennzeichnet, dass** die den Stromkollektor (4a, 4b) bildende poröse Struktur aus einem Sintermaterial, vorzugsweise aus einem porösen Nickel-Sintermaterial besteht.

12. Brennstoffzelle nach Anspruch 11, **dadurch gekennzeichnet, dass** die den Stromkollektor (4a, 4b) bildende poröse Struktur aus einem Nickel-Schaum-Material mit einem Feststoffgehalt von 4% bis ca. 35% besteht.

13. Brennstoffzelle nach einem der Ansprüche 1 bis 11, **dadurch gekennzeichnet, dass** die isolierende Schicht (31,; 131; 231) aus einer Schicht Matrixmaterial besteht.

14. Brennstoffzelle nach einem der Ansprüche 1 bis 12, **dadurch gekennzeichnet, dass** die isolierende Schicht (131; 331; 431; 432) aus einem vom Matrixmaterial verschiedenen Isoliermaterial besteht.

15. Brennstoffzelle nach einem der Ansprüche 1 bis 14, **dadurch gekennzeichnet, dass** die Matrix (3) auf der Halbzelle (11; 12) einschließlich der Dichtungselemente (21; 22) aufgebracht ist und gleichzeitig als isolierende Schicht (31) dient.

16. Verfahren zur Herstellung einer Brennstoffzelle nach einem der Ansprüche 1 bis 15, **dadurch gekennzeichnet, dass** die Elektrolytmatrix (3) oder Elektrolytschicht durch Herstellen einer Beschichtung auf der Halbzelle (11; 111; 12; 212; 312) aufgebracht wird.

17. Verfahren nach Anspruch 16, **dadurch gekennzeichnet, dass** die Beschichtung durch Sprühen, Gießen, Tauchen oder Rakeln hergestellt wird.

18. Verfahren nach Anspruch 16 oder 17, **dadurch gekennzeichnet, dass** die Dichtungselemente (21, 22) seitlich auf die Halbzellen (11; 111; 211; 311; 12; 112; 212; 312) aufgesteckt werden.

19. Verfahren nach Anspruch 18, **dadurch gekennzeichnet, dass** die Oberfläche des Dichtungselements (21; 22) einschließlich, sofern vorhanden, der isolierenden Schicht (131) durch Walzen, Prägen oder Pressen mit der Oberfläche der Halbzelle (11; 111; 211; 311; 12; 112; 212; 312) bündig gemacht wird.

20. Verfahren nach Anspruch 18, **dadurch gekennzeichnet, dass** vor dem Aufstecken der Dichtungselemente (21; 22) durch Walzen, Prägen oder Pressen ein Absatz (25) an den Halbzellen (11; 111; 211; 311; 12; 112; 212; 312) hergestellt wird, so dass die Dichtungselemente (21; 22) einschließlich, sofern vorhanden, der isolierenden Schicht (131) mit der Oberfläche der Halbzelle bündig ist.

21. Verfahren nach einem der Ansprüche 16 bis 20, **dadurch gekennzeichnet, dass** die isolierende Schicht (31; 131; 331; 431; 432) durch Sprühen, Gießen, Tauchen oder Rakeln hergestellt wird.

22. Verfahren nach einem der Ansprüche 16 bis 21, **dadurch gekennzeichnet, dass** zuerst die Dichtungselemente (21; 22) aufgebracht und dann die Matrix (3) oder Elektrolytschicht auf die Halbzelle (11; 12) aufgebracht wird, die gleichzeitig als isolierende Schicht (31) dient.

23. Verfahren nach Anspruch 22, **dadurch gekennzeichnet, dass** die Matrix (3) oder Elektrolytschicht durch Sprühen, Gießen, Tauchen oder Rakeln aufgebracht wird.

## Claims

1. Fuel cell, in particular a melt carbonate fuel cell, having an anode (1), a cathode (2) and an electrolyte matrix (3), which is arranged between them, or an electrolyte layer, and having current collectors (4a, 4b) which are arranged at the anode (1) and at the cathode (2), respectively make contact with the anode (1) and the cathode (2) and respectively form gas flow paths (17, 18) for a fuel gas or a cathode gas respectively to the anode (1) and to the cathode (2) with the anode-side current collector (4a) together with the anode (1) forming an anode half cell (11; 111; 211; 311), and with the cathode-side current collector (4b) together with the cathode (2) forming a cathode half cell (12, 112; 212; 312), **characterized**
**in that** the electrolyte matrix (3) or the electrolyte layer is applied to one of the half cells (11; 12; 111; 212; 312), and in that sealing elements (21, 22) are provided, are arranged on the sides of the current collectors (4a, 4b), form a U-shaped cross section (which is open towards the interior of the fuel cell) and respectively surround and seal the current collector (4a, 4b) of the anode (1) and of the cathode (2) at the side, with an insulating layer (31; 131; 331; 431; 432) being provided, which electrically insulates the respective sealing element (21, 22) of one half cell (11; 111; 311; 312) from the other half cell (12; 112; 312).

2. Fuel cell according to Claim 1, **characterized**
**in that** the electrolyte matrix (3) or electrolyte layer is applied to the anode half cell (11; 111).

3. Fuel cell according to Claim 1, **characterized**
**in that** the electrolyte matrix (3) or electrolyte layer is applied to the cathode half cell (12; 212).

4. Fuel cell according to Claim 1, 2 or 3, **characterized**
**in that** the sealing elements (21; 22) are respectively provided opposite one another at the anode half cell (11; 111; 211) and of the cathode half cell (12; 112; 212).

5. Fuel cell according to Claim 1, 2 or 3, **characterized**
**in that** the sealing elements (21; 22) are respectively provided on one side of the anode half cell (311) and of the cathode half cell (312), with the sealing element (21) of the anode half cell (311) being provided on one side, and with the sealing element (22) of the cathode half cell (312) being provided on the other side.

6. Fuel cell according to one of Claims 1 to 5, **characterized**
**in that** the insulating layer (31, 131, 431) is provided on the sealing element (21; 22).

7. Fuel cell according to one of Claims 1 to 5, **characterized**
**in that** the insulating layer (331) is provided on the other half cell (311), opposite the sealing element of the first half cell (312).

8. Fuel cell according to one of Claims 1 to 6, **characterized**
**in that** the sealing element (21) has an insulating layer (431; 432) internally and/or externally.

9. Fuel cell according to one of Claims 1 to 8, **characterized**
**in that** the current collector (4a, 4b) is formed by a porous structure which is respectively fitted with the anode (1) or the cathode (2) and in which flow paths (17, 18) are formed in order to respectively supply fuel gas and cathode gas to the respective anode (1) or cathode (2), and in that the sealing elements (21, 22) surround and seal at the side the porous structure, which forms the current collector (4a, 4b), and the porous structure which forms the current collector (4a, 4b) and, if present, the respective anode (1) and cathode (2) located thereon.

10. Fuel cell according to Claim 9 in conjunction with Claim 6 or 8, **characterized**
**in that** the height of the sealing element (21) including, if present, the insulating layer (131) corresponds to the thickness of the half cell (11; 111; 211; 311; 12; 112; 212; 312) so that the surfaces of the two are flush.

11. Fuel cell according to Claim 9 or 10, **characterized**
**in that** the porous structure which forms the current collector (4a, 4b) is composed of a sintered material, preferably of a porous nickel sintered material.

12. Fuel cell according to Claim 11, **characterized**
**in that** the porous structure which forms the current collector (4a, 4b) is composed of a nickel foam material with a solid content of 4% up to about 35%.

13. Fuel cell according to one of Claims 1 to 11, **characterized**
**in that** the insulating layer (31,; 131; 231) is composed of a layer of matrix material.

14. Fuel cell according to one of Claims 1 to 12, **characterized**
**in that** the insulating layer (131; 331; 431; 432) is composed of an insulating material that is not the same as the matrix material.

15. Fuel cell according to one of Claims 1 to 14, **characterized**
**in that** the matrix (3) is applied to the half cell (11; 12) including the sealing elements (21; 22), and is used at the same time as the insulating layer (31).

16. Method for production of a fuel cell according to one of Claims 1 to 15, **characterized**
**in that** the electrolyte matrix (3) or electrolyte layer is applied to the half cell (11; 111; 12; 212; 312) by production of a coating.

17. Method according to Claim 16, **characterized**
**in that** the coating is produced by spraying, casting, dipping or wiping.

18. Method according to Claim 16 or 17, **characterized**
**in that** the sealing elements (21, 22) are plugged onto the half cells (11; 111; 211; 311; 12; 112; 212; 312) at the side.

19. Method according to Claim 18, **characterized**
**in that** the surface of the sealing element (21; 22) including, if present, the insulating layer (131) is made flush with the surface of the half cell (11; 111; 211; 311; 12; 112; 212; 312) by rolling, stamping or pressing.

20. Method according to Claim 18, **characterized**
**in that** before the sealing elements (21; 22) are plugged on, a step (25) is produced on the half cells (11; 111; 211; 311; 12; 112; 212; 312) by rolling, stamping or pressing, such that the sealing elements (21; 22) including, if present, the insulating layer (131) are flush with the surface of the half cell.

21. Method according to one of Claims 16 to 20, **characterized**
**in that** the insulating layer (31; 131; 331; 431; 432) is produced by spraying, casting, dipping or wiping.

22. Method according to one of Claims 16 to 21, **characterized**
**in that** the sealing elements (21; 22) are applied first of all, after which the matrix (3) or electrolyte layer is applied to the half cell (11; 12), and is used at the same time as the insulating layer (31).

23. Method according to Claim 22, **characterized**
**in that** the matrix (3) or electrolyte layer is applied by spraying, casting, dipping or wiping.

## Revendications

1. Pile à combustible, en particulier pile à combustible à carbonate fondu, comportant une anode (1), une cathode (2) et une matrice d'électrolyte (3) ou une couche d'électrolyte disposée entre celles-ci, ainsi que des collecteurs de courant (4a, 4b) disposés sur l'anode (1) et sur la cathode (2), qui sont en contact électrique avec l'anode (1) ou la cathode (2) et forment des chemins d'écoulement de gaz (17, 18) pour un gaz combustible vers l'anode (1) ou pour un gaz cathodique vers la cathode (2), dans laquelle le collecteur de courant côté anode (4a) forme avec l'anode (1) une demi-cellule anodique (11 ; 111 ; 211 ; 311) et le collecteur de courant côté cathode (4b) forme avec la cathode (2) une demi-cellule cathodique (12 ; 112 ; 212 ; 312), **caractérisée en ce que** la matrice d'électrolyte (3) ou la couche d'électrolyte est déposée sur une des demi-cellules (11 ; 12 ; 111 ; 212 ; 312) et **en ce qu'**il est prévu des éléments d'étanchéité (21, 22) disposés sur les côtés des collecteurs de courant (4a, 4b) et formant une section transversale en forme de U ouverte vers l'intérieur de la pile à combustible, qui entourent latéralement et rendent étanche le collecteur de courant (4a, 4b) de l'anode (1) ou de la cathode (2), dans laquelle il est prévu une couche isolante (31 ; 131 ; 331 ; 431 ; 432) qui isole électriquement l'élément d'étanchéité respectif (21, 22) d'une demi-cellule (11 ; 111 ; 311 ; 312) par rapport à l'autre demi-cellule (12 ; 112 ; 312).

2. Pile à combustible selon la revendication 1, **caractérisée en ce que** la matrice d'électrolyte (3) ou la couche d'électrolyte est déposée sur la demi-cellule anodique (11 ; 111).

3. Pile à combustible selon la revendication 1, **caractérisée en ce que** la matrice d'électrolyte (3) ou la couche d'électrolyte est déposée sur la demi-cellule cathodique (12 ; 212).

4. Pile à combustible selon la revendication 1, 2 ou 3, **caractérisée en ce que** les éléments d'étanchéité (21 ; 22) sont chaque fois prévus l'un en face de l'autre sur la demi-cellule anodique (11 ; 111 ; 211) et sur la demi-cellule cathodique (12 ; 112 ; 212).

5. Pile à combustible selon la revendication 1, 2 ou 3, **caractérisée en ce que** les éléments d'étanchéité (21 ; 22) sont respectivement prévus sur un côté de la demi-cellule anodique (311) et de la demi-cellule cathodique (312), l'élément d'étanchéité (21) de la demi-cellule anodique (311) étant prévu sur un côté et l'élément d'étanchéité (22) de la demi-cellule cathodique (312) étant prévu sur l'autre côté.

6. Pile à combustible selon l'une quelconque des revendications 1 à 5, **caractérisé en ce que** la couche isolante (31 ; 131 ; 431) est prévue sur l'élément d'étanchéité (21 ; 22).

7. Pile à combustible selon l'une quelconque des revendications 1 à 5, **caractérisée en ce que** la couche isolante (331) est prévue sur une demi-cellule (311) en face de l'élément d'étanchéité (22) sur l'autre demi-cellule (312).

8. Pile à combustible selon l'une quelconque des revendications 1 à 6, **caractérisée en ce que** l'élément d'étanchéité (21) présente, intérieurement et/ou extérieurement, une couche isolante (431 ; 432).

9. Pile à combustible selon l'une quelconque des revendications 1 à 8, **caractérisée en ce que** le collecteur de courant (4a, 4b) est formé par une structure poreuse, qui porte l'anode (1) ou la cathode (2) et dans laquelle sont formés des chemins d'écoulement (17, 18) pour acheminer du gaz combustible à l'anode (1) ou du gaz cathodique à la cathode (2), et **en ce que** les éléments d'étanchéité (21 ; 22) entourent latéralement et rendent étanche la structure poreuse formant le collecteur de courant (4a, 4b) ou la structure poreuse formant le collecteur de courant (4a, 4b) et, si elles sont présentes, l'anode (1) ou la cathode (2) se trouvant sur celle-ci.

10. Pile à combustible selon la revendication 9 en relation avec la revendication 6 ou 8, **caractérisée en ce que** la hauteur de l'élément d'étanchéité (21), y compris, si elle est présente, de la couche isolante (131), correspond à l'épaisseur de la demi-cellule (11 ; 111 ; 211 ; 311 ; 12 ; 112 ; 212 ; 312), de telle sorte que les surfaces des deux soient en alignement.

11. Pile à combustible selon la revendication 9 ou 10, **caractérisée en ce que** la structure poreuse formant le collecteur de courant (4a, 4b) se compose d'un matériau fritté, de préférence d'un matériau fritté poreux en nickel.

12. Pile à combustible selon la revendication 11, **caractérisée en ce que** la structure poreuse formant le collecteur de courant (4a, 4b) se compose d'un matériau cellulaire en nickel avec une teneur en matières solides de 4 % à environ 35 %.

13. Pile à combustible selon l'une quelconque des revendications 1 à 11, **caractérisée en ce que** la couche isolante (31 ; 131 ; 231) se compose d'une couche du matériau de matrice.

14. Pile à combustible selon l'une quelconque des revendications 1 à 12, **caractérisée en ce que** la couche isolante (131 ; 331 ; 431 ; 432) se compose d'un matériau isolant différent du matériau de matrice.

15. Pile à combustible selon l'une quelconque des revendications 1 à 14, **caractérisée en ce que** la matrice (3) est déposée sur la demi-cellule (11 ; 12) y compris les éléments d'étanchéité (21 ; 22) et sert en même temps de couche isolante (31).

16. Procédé de fabrication d'une pile à combustible selon l'une quelconque des revendications 1 à 15, **caractérisé en ce que** l'on dépose la matrice d'électrolyte (3) ou la couche d'électrolyte en formant un revêtement sur la demi-cellule (11 ; 111 ; 12 ; 212 ; 312).

17. Procédé selon la revendication 16, **caractérisé en ce que** l'on forme le revêtement par projection, coulée, immersion ou raclage.

18. Procédé selon la revendication 16 ou 17, **caractérisé en ce que** l'on emboîte les éléments d'étanchéité (21, 22) latéralement sur les demi-cellules (11 ; 111 ; 211 ; 311 ; 12 ; 112 ; 212 ; 312).

19. Procédé selon la revendication 18, **caractérisé en ce que** l'on aligne la surface de l'élément d'étanchéité (21 ; 22) y compris, si elle est présente, de la couche isolante (131), avec la surface de la demi-cellule (11 ; 111 ; 211 ; 311 ; 12 ; 112 ; 212 ; 312) par laminage, estampage ou pressage.

20. Procédé selon la revendication 18, **caractérisé en ce que** l'on forme un épaulement (25) sur les demi-cellules (11 ; 111 ; 211 ; 311 ; 12 ; 112 ; 212 ; 312), avant l'emboîtement des éléments d'étanchéité (21 ; 22), de telle sorte que les éléments d'étanchéité (21 ; 22), y compris, si elle est présente, la couche isolante (131), soient en alignement avec la surface de la demi-cellule.

21. Procédé selon l'une quelconque des revendications 16 à 20, **caractérisé en ce que** l'on forme la couche isolante (31 ; 131 ; 331 ; 431 ; 432) par projection, coulée, immersion ou raclage.

22. Procédé selon l'une quelconque des revendications 16 à 21, **caractérisé en ce que** l'on applique d'abord les éléments d'étanchéité (21 ; 22) et l'on dépose ensuite sur la demi-cellule (11 ; 12) la matrice (3) ou la couche d'électrolyte, qui sert en même temps de couche isolante (31).

23. Procédé selon la revendication 22, **caractérisé en ce que** l'on dépose la matrice (3) ou la couche d'électrolyte par projection, coulée, immersion ou raclage.
